Europäisches Patentamt

European Patent Office

Office européen des brevets

(11) Publication number: **0 321 965 B1**

# EUROPEAN PATENT SPECIFICATION

(45) Date of publication of patent specification: **04.03.92** (51) Int. Cl.⁵: **B23K 26/00**, B23K 26/02

(21) Application number: **88121433.2**

(22) Date of filing: **21.12.88**

(54) **Accident prevention method and apparatus for monitoring the emission of a laser beam in a work station.**

(30) Priority: **22.12.87 IT 6810887**

(43) Date of publication of application:
**28.06.89 Bulletin  89/26**

(45) Publication of the grant of the patent:
**04.03.92 Bulletin  92/10**

(84) Designated Contracting States:
**DE ES FR GB SE**

(56) References cited:
**US-A- 3 602 576**
**US-A- 4 710 606**

(73) Proprietor: **FIAT AUTO S.p.A.**
**Corso Giovanni Agnelli 200**
**I-10135 Torino(IT)**

(72) Inventor: **Pairetti, Bartolomeo**
**Via Onorato Vigliani 15/10**
**I-10100 Torino(IT)**

(74) Representative: **Boggio, Luigi et al**
**STUDIO TORTA Società Semplice Via Viotti,**
**9**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to an accident prevention method and safety apparatus for monitoring the emission of a laser beam at a work station.

More particularly, the present invention relates to a method and apparatus for preventing a laser beam, available at the output of an emitter suitably moved by a related automatic machine, from being able inadvertently to become directed towards the non-protected zone and damage it.

As is known, from US-A-4 710 606, for the purpose of achieving protection against possible laser radiation which inadvertently (for example because of multiple reflections) escape from a predetermined operating zone of a work station, this zone is delimited with walls having a suitable thickness and made of a material, for example a transparent plastics resin such as PLEXIGLAS (registered trade mark of Rohm and Haas Company) which has the property of absorbing the heat energy associated with the laser beam for a short time before becoming perforated by the beam itself.

For the purpose of detecting an unexpected emission of a laser beam in the direction of these walls they usually have embedded therein a wire of conductive material having a low melting point and the continuity of the wire itself is detected by means of suitable apparatus which, as soon as it detects an interruption of this continuity, causes an immediate cessation of the emission of the laser beam. In general this wire has an extremely small cross-section (so as to be rapidly fused) and is disposed within the wall in such a way as to assume a serpentine conformation with a very fine mesh to guarantee that the incident laser beam will be detected securely and can consequently stop the emission quickly.

The accident prevention method currently adopted and explained above, whilst having a generalised application, is rather wasteful both because of the prearrangement of the electrically conductive wire within the associated wall and because of the inevitable operations of renewing the electrical connection of this wire after an interruption caused by the laser beam mentioned above.

The object of the present invention is that of proposing a method and of providing an apparatus for accident prevention which will allow the emission from a laser beam in a work station to be monitored in an effective, rapid and reliable manner and which has an installation and maintenance cost which is reduced with respect to that currently known.

The said object is achieved with the present invention in that it relates to an accident prevention method for monitoring the emission of a laser beam in a work station in which a laser emitter works, comprising the following operations:

a) peripherally delimiting the said work station with at least one wall made of a transparent, non-flammable material resistant to high temperatures;

b) detecting the illumination within this wall;

c) comparing the intensity of this illumination with at least one first predetermined threshold value; and

d) causing de-energisation of the said laser emitter whenever the detected value of the intensity of illumination exceeds the said first predetermined threshold value.

The present invention likewise relates to accident prevention apparatus for monitoring the emission of a laser beam at a work station in which a laser emitter operates, comprising:

protection means adapted to peripherally delimit the said work station and having at least one wall made of a transparent, non-flammable material resistant to high temperatures; characterised by:

a) an internal hollow seat provided in said wall;

b) illumination detector means sensitive to the radiation emitted upon incidence of the said laser beam onto the said wall and operable to generate a signal dependent on the intensity of illumination within the said seat;

c) comparison means for comparing the signal generated by the said detector means with at least one first predetermined threshold value, the said comparison means generating a signal for de-energising the said laser emitter whenever the value assumed by the said signal generated by the said detector means exceeds the said first predetermined threshold value.

For a better understanding of the present invention a preferred embodiment is described hereinafter purely by way of non-limitative example and with reference to the attached drawings, in which a possible accident prevention apparatus formed according to the present invention is schematically illustrated.

With particular reference to this drawing, the reference numeral 1 generally indicates an accident prevention apparatus for monitoring the emission of a laser beam 2 in a work station (not illustrated) in which an emitter 3 of conventional type and conveniently moved by means of an arm of an automatic machine (not illustrated) operates.

The apparatus 1 essentially comprises:

a) a wall 4 peripherally delimiting the said work station, this wall 4 being preferably made of a transparent synthetic resin such as for example PLEXIGLAS (registered trade mark of Rohm and Haas Company) and provided with an internal hollow seat 5;

b) illumination detector means 6 sensitive to the radiation emitted upon incidence of the laser beam 2 on the wall 4, operable to generate a signal dependent on the intensity of illumination within the above-mentioned seat 5; and

c) comparison means 7 for comparing the signal generated by the detector means 6 with at least one predetermined threshold value Vmax, this comparison means 7 generating a signal for turning off the laser emitter 3 whenever the signal value generated by the detector means 6 exceeds the said threshold value Vmax.

More particularly, the internal seat 5 is essentially constituted by a through hole 11 formed in the wall 4 and delimited on opposite sides by respective flanged covers 12, 13 mounted facing one another. The surfaces of the through hole 11 and of the delimiting covers 12, 13 are conveniently mechanically worked (for example by the production of grooves or general roughness perpendicular to the plane defined by the surfaces themselves) for the purpose of encouraging good reflection of the light incident on any point thereof.

The illumination detector means 6 is constituted by a photo-sensitive element, for example a photo-diode or a photo-transistor, the terminals of which are connected to a portion of an associated connector 14 supported by the cover 13. This element is operable to generate an electrical signal depending on the intensity of illumination on its sensitive surface 15.

Within the seat 5 and in a position substantially facing the surface 15 mentioned above there is located a photo-emitter element 18, for example a light-emitting diode, which is supported by the flanged cover 12 and whose terminals are connected to a corresponding portion of the connector 14.

The comparison means 7 substantially comprise a plurality of threshold comparators 20, each of which is adapted to be connected to a corresponding detector means 6 conveniently located in a respective wall 4 of the above-mentioned work station. In particular, each comparator 20 has a pair of inputs 21, 22 to which are supplied reference signals Vmax, Vmin delimiting the upper and lower ends of a range of voltage values within which the signal generated by the photo-sensitive element 6 must remain, which signal is passed to an input 23 of the comparator 20.

The output of each comparator 20 is connected to an associated input of a processing network 25, for example of the combinatorial type, provided with an output which is connected to a control input of a switch 26, for example of electronic type, which in turn is mounted between a supply pole 30 and an electrical supply unit (not illustrated) of the laser emitter 3.

The operation of the apparatus is as follows.

In normal operating conditions the laser beam 2 is orientated within a region to be subjected to treatment within the interior of the said work station. The photo-sensitive element 6 detects an illumination which is substantially that due to ambient light and generates an electrical signal the value of which lies between the said reference values Vmax and Vmin. This consequently results in the processing network 25 emitting a control signal which maintains the switch 30 closed allowing electrical supply to the laser emitter 3 and the consequent emission of the beam 2.

If the laser beam 2 should become incident on the wall 4 there is immediately manifest a partial destruction of a surface portion of the wall itself with the consequent formation of a flash.

Because of the particular characteristics of the material constituting the wall 4, the flash does not cause a fire, but rather, as long as the emission of the laser beam 2 is immediately interrupted, the wall 4 will not even be perforated.

In practice, the light originating from the flash radiates in all directions outwardly from the zone of impact of the laser beam 2. In particular, because of the different coefficients of refraction of light presented by the material constituting the wall 4 and air, a portion of the light deriving from the above-mentioned flash is propagated within the wall 4 following a path indicated Z to reach the surface of the hole 11. From this latter, because of the said mechanical surface working introduced to the surfaces delimiting the seat 5, the light is transmitted to the sensitive surface 15 of the element 6 which, consequently, generates an electrical supply with an amplitude dependent on the overall detected illumination.

With suitable calibration of the upper value Vmax of the reference signal of the comparator 20 commutation of the output signal of the comparator itself takes place and, therefore, the switch 26 is opened by the processing network 25. Consequently the electrical supply to the laser emitter 3 is instantaneously removed so that the laser beam 2 automatically de-energises interrupting the overheating of the protective wall 4.

This beam 2 is also automatically de-energised by the apparatus 1 if the photo-sensitive element 6 should break down; in these conditions, in fact, the signal generated by this latter, obviously being less than the lowermost reference value Vmin provided for by the comparator 20, commutation of the output signal generated by this latter occurs within identical consequences to those described above.

Checking of the operation of the apparatus 1 and in particular of the photo-sensitive element 6 can be effected by periodically supplying the photo-emitter element 18 in such a way as to create artificially the supplementary illumination conditions which pertain in the event of incidence of the laser beam on the surface of the wall 4.

From a study of the characteristics of the method and apparatus proposed for monitoring the emission of a laser beam according to the present invention the advantages which are achieved thereby are evident.

First of all, the protective wall does not require expensive treatment such as, for example, the introduction of the said fine mesh conductive wire, with all the problems connected with the renewal of the electrical connections of the wire itself in the event of incidence of the laser beam.

Moreover, it is not required that the wall itself be almost perforated in order to trigger the de-energising of the laser emitter, in that it is observed that the initial flash from the first impact of the beam is in itself sufficient to cause commutation of the output of the comparator provided for monitoring the intensity of illumination of the sensitive surface of the photo-detector element.

It is also observed that, because of the internal surface working of the seat in which the photo-sensitive element is housed, it is sufficient to use a single photo-sensitive element for each wall delimiting the laser station; in fact, even if the laser beam is incident at a position not facing the photo-sensitive element the radiation which reaches the seat 5 undergoes multiple reflections within the interior of the seat itself until it strikes the surface of the said photo-sensitive element.

Finally, it is clear that the method and apparatus 1 described above can have modifications and variations introduced thereto without departing from the present invention.

For example, the light-emitting diode 18 could be maintained constantly illuminated and the intervention thresholds Vmax and Vmin of the comparator 20 suitably calibrated; this would involve, as a consequence, a lower sensitivity of the apparatus 1 to variations in ambient illumination.

It is observed that in work stations provided with protective walls which are at least in part curvilinear (for example in the form of a cupola) an unwanted interference by sources of ambient illumination is manifest. The light emitted by such sources penetrates more easily into the interior of the protective wall and reaches the photo-sensitive element causing de-energisation of the laser beam.

The disadvantage can easily be overcome both by effecting an accurate calibration of the reference voltage values Vmax, Vmin and by cladding the surface of these walls facing the sources of illumination with filtering or partially reflecting adhesive skin which prevents (or at least largely attenuates) the propagation of the external light towards the seat in which the photo-sensitive element is situated. The light-emitting diode 18 could also be maintained constantly supplied and the intervention thresholds Vmax and Vmin of the comparator 20 suitably calibrated; in this case, too, a lower sensitivity of the apparatus 1 to ambient illumination variations would be obtained.

It is likewise evident that the protective walls could be made with a different material from the above-mentioned PLEXIGLAS with the same concept of utilising a material having similar properties such as transparency, lack of flammability, and resistance to high temperatures, even if only for short periods of time, before becoming damaged.

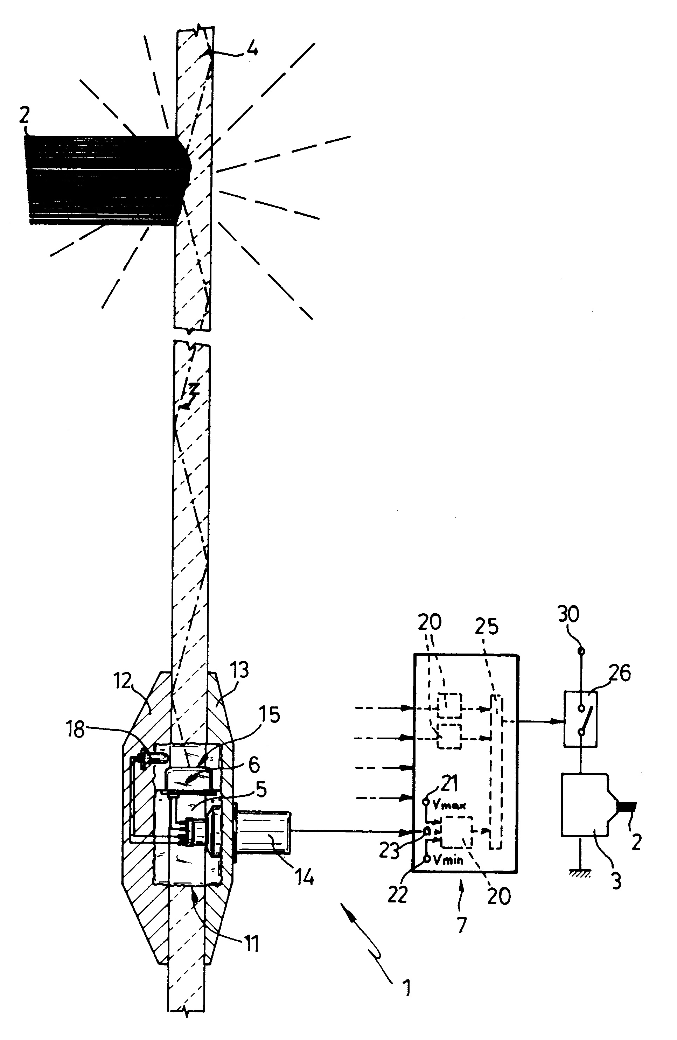

## Claims

1. An accident prevention method for monitoring the emission of a laser beam in a work station in which a laser emitter operates, comprising the following operations:

   a) peripherally delimiting the said work station with at least one wall (4) made of transparent non-flammable material resistant to high temperatures;

   b) detecting the illumination within the interior of this wall (4);

   c) comparing the intensity of this illumination with at least one first predetermined threshold value (Vmax); and

   d) causing the said laser emitter (3) to be de-energised whenever the detected value of intensity of illumination exceeds the said first predetermined threshold value (Vmax).

2. A method according to Claim 1, characterised by the fact that the operation of comparing the intensity of illumination also includes a comparison with a second predetermined threshold value (Vmin) and de-energisation of the said laser emitter (3) whenever the detected value of the intensity of illumination is less than the said second predetermined threshold value (Vmin).

3. A method according to Claim 1 or Claim 2, characterised by the fact that it includes an additional operation of auxiliary illumination of the interior of the said wall (4) hereby artificially to cause the said laser emitter (3) to be de-energised for the purpose of checking the operation of the system.

4. Accident prevention apparatus for monitoring the emission of a laser beam in a work station in which a laser emitter operates, comprising protection means operable to peripherally delimit the said work station and having at least one wall (4) made of a transparent non-flammable material resistant to high temperatures; characterised by:

a) an internal hollow seat (5) provided in said wall (4);

b) illumination detector means (6) sensitive to radiation emitted upon incidence of the said laser beam (2) on the said wall (4) and operable to generate a signal dependent on the intensity of illumination of the interior of the said seat (5);

c) comparison means (7) for comparing the signal generated by the said detector means (6) with at least one first predetermined threshold value (Vmax), the said comparison means (7) generating a signal for de-energising the said laser emitter (3) whenever the value assumed by the said signal generated by the said detector means (6) exceeds the said first predetermined threshold value (Vmax).

5. Apparatus according to Claim 4, characterized by the fact that the material constituting the said wall (4) is a transparent synthetic plastics resin.

6. Apparatus according to Claim 5, characterised by the fact that the said transparent synthetic plastics resin is PLEXIGLAS (registered trade mark).

7. Apparatus according to any of Claims from 4 to 6, characterised by the fact that the said hollow internal seat (5) is delimited peripherally by rough surfaces.

8. Apparatus according to Claim 7, characterised by the fact that the said surfaces delimiting the said hollow internal seat (5) have a grooved conformation.

9. Apparatus according to any of Claims from 4 to 8, characterised by the fact that the said illumination detector means (6) are essentially constituted by a photo-diode or a photo-transistor.

10. Apparatus according to any preceding Claim, characterised by the fact that the said comparison means (6) comprise at least one threshold comparator (20) provided with at least a first input (21) at which the said first predetermined threshold value (Vmax) is present.

11. Apparatus according to Claim 10, characterised by the fact that the said threshold comparator (20) is provided with a second input (22) at which a second predetermined threshold value (Vmin) is present, the said comparator (20) being operable to generate a signal for de-energising the said laser emitter (3), also in the case in which the said signal generated by the said detector means (6) is less than the said second predetermined threshold value (Vmin).

12. Apparatus according to any of Claims from 4 to 11, characterised by the fact that it includes illumination means (18) located within the interior of the said seat (5).

13. Apparatus according to Claim 12, characterised by the fact that the said illumination means (18) are essentially constituted by a light-emitting diode.

14. Apparatus according to any of Claims from 4 to 13, characterised by the fact that it includes light screen means disposed for the protection of the surface of each of the said walls (4) on the side opposite the region in which the said laser emitter (3) operates.

**Revendications**

1. Méthode de prévention des accidents pour surveiller l'émission d'un faisceau laser dans un poste de travail dans lequel fonctionne un émetteur laser, comprenant les opérations suivantes :

a) délimiter périphériquement le poste de travail avec au moins une paroi (4) en un matériau transparent ininflammable résistant aux hautes températures;

b) détecter l'éclairement à l'intérieur de cette paroi (4);

c) comparer l'intensité de cet éclairement avec au moins une première valeur de seuil prédéterminée (Vmax); et

d) provoquer la désexcitation de l'émetteur laser (3) chaque fois que la valeur détectée de l'intensité de l'éclairement excède la première valeur de seuil prédéterminée (Vmax).

2. Méthode selon la revendication 1, caractérisée par le fait que l'opération consistant à comparer l'intensité de l'éclairement comporte également une comparaison avec une deuxième valeur de seuil prédéterminée (Vmin) et une désexcitation de l'émetteur laser (3) chaque fois que la valeur détectée de l'intensité de l'éclairement est inférieure à la deuxième valeur de seuil prédéterminée (Vmin).

3. Méthode selon la revendication 1 ou la revendication 2, caractérisée par le fait qu'elle comporte une opération additionnelle d'éclairage auxiliaire de l'intérieur de la paroi (4) afin de provoquer artificiellement la désexcitation de l'émetteur laser (3) à des fins de contrôle du fonctionnement du système.

4. Appareil de prévention des accidents pour surveiller l'émission d'un faisceau laser dans un poste de travail dans lequel fonctionne un émetteur laser, comprenant des moyens de protection servant à délimiter périphériquement le poste de travail et ayant au moins une paroi (4) en un matériau transparent ininflammable résistant aux hautes températures, caractérisé par :

a) un logement creux interne (5) ménagé dans cette paroi (4);
b) un détecteur d'éclairement (6) sensible au rayonnement émis lors de l'incidence de ce faisceau laser (2) sur la paroi (4) et fonctionnant pour émettre un signal fonction de l'intensité de l'éclairement de l'intérieur du logement (5);
c) des moyens de comparaison (7) pour comparer le signal émis par le détecteur (6) avec au moins une première valeur de seuil prédéterminée (Vmax), les moyens de comparaison (7) émettant un signal pour désexciter l'émetteur laser (3) chaque fois que la valeur prise par le signal émis par le détecteur (6) est supérieure à la première valeur de seuil prédéterminée (Vmax).

5. Appareil selon la revendication 4, caractérisé par le fait que le matériau constituant la paroi (4) est une résine plastique synthétique transparente.

6. Appareil selon la revendication 5, caractérisé par le fait que la résine plastique synthétique transparente est du PLEXIGLAS (Marque commerciale déposée).

7. Appareil selon l'une des revendications 4 à 6, caractérisé par le fait que le logement creux interne (5) est délimité périphériquement par des surfaces rugueuses.

8. Appareil selon la revendication 7, caractérisé par le fait que les surfaces délimitant le logement creux interne (5) sont rainurées.

9. Appareil selon l'une des revendications 4 à 8, caractérisé par le fait que le détecteur d'éclairement (6) est essentiellement constitué par une photodiode ou un phototransistor.

10. Appareil selon l'une des revendications précédentes, caractérisé par le fait que les moyens de comparaison (7) comprennent au moins un comparateur de seuil (20) pourvu d'au moins une première entrée (21) à laquelle est amenée la première valeur de seuil prédéterminée (Vmax).

11. Appareil selon la revendication 10, caractérisé par le fait que le comparateur de seuil (20) est pourvu d'une deuxième entrée (22) à laquelle est amenée une deuxième valeur de seuil prédéterminée (Vmin), le comparateur (20) fonctionnant pour produire un signal pour désexciter l'émetteur laser (3), également dans le cas où le signal émis par le détecteur (6) est inférieur à la deuxième valeur de seuil prédéterminée (Vmin).

12. Appareil selon l'une des revendications 4 à 11, caractérisé par le fait qu'il comporte des moyens d'éclairage (18) situés à l'intérieur du logement (5).

13. Appareil selon la revendication 12, caractérisé par le fait que les moyens d'éclairage (18) sont essentiellement constitués par une diode électroluminescente.

14. Appareil selon l'une des revendications 4 à 13, caractérisé par le fait qu'il comporte des moyens d'écran vis-à-vis de la lumière disposés pour protéger la surface de chacune des parois (4) sur le côté opposé à la région dans laquelle fonctionne l'émetteur laser (3).

**Patentansprüche**

1. Unfallverhütungsverfahren zum Überwachen der Emission eines Laserstrahles in einer Arbeitsstation, in der ein Laserstrahler betrieben wird, aufweisend die folgenden Verfahrensschritte:

a.) peripheres Abgrenzen der Arbeitsstation mit zumindest einer Wand (4), die aus transparentem, nicht brennbaren, gegenüber hohen Temperaturen resistenten Material besteht;
b.) Messen der Illumination im Inneren dieser Wand (4);
c.) Vergleichen der Intensität dieser Illumination mit zumindest einem ersten vorgegebenen Schwellwert (Vmax); und
d.) Veranlassen, den Laserstrahler (3) abzuschalten, immer wenn der gemessene Wert der Illuminationsintensität den ersten vorgegebenen Schwellwert (Vmax) übersteigt.

2. Verfahren nach Anspruch 1, dadurch gekennzeichnet, daß der Verfahrensschritt des Vergleichens der Illuminationsintensität auch einen Vergleich mit einem zweiten vorgegebenen Schwellwert (Vmin) und eine Abschaltung des Laserstrahlers (3) einschließt, immer wenn der gemessene Wert der Illuminationsintensität niedriger als der zweite vorgegebene Schwellwert (Vmin) ist.

3. Verfahren nach Anspruch 1 oder Anspruch 2, dadurch gekennzeichnet, daß es einen zusätzlichen Verfahrensschritt der Hilfsillumination des Inneren der Wand (4) einschließt, um künstlich den Laserstrahler (3) zu veranlassen, zum Zwecke des Prüfens der Wirkungsweise des Systems abgeschaltet zu werden.

4. Unfallverhütungsvorrichtung zum Überwachen der Emission eines Laserstrahles in einer Arbeitsstation, in der ein Laserstrahler betrieben wird, mit Schutzmitteln, die betätigbar sind, die Arbeitsstation nach außen abzugrenzen und die zumindest eine Wand (4) aufweisen, die aus einem transparenten, nicht brennbaren, gegenüber hohen Temperaturen resistenten Material besteht, gekennzeichnet durch
a.) eine innen hohle Aufnahme (5), die in der Wand (4) vorgesehen ist;
b.) Illuminationsmeßmittel (6), die die Strahlung erfassen, die infolge des Einfalls des Laserstrahles (2) auf die Wand (4) ausgesendet wird, und die bewirken, ein Signal zu erzeugen, das abhängig von der Illuminationsintensität des Inneren der Aufnahme (5) ist;
c.) Vergleichsmittel (7) zum Vergleichen des Signals, das durch die Meßmittel (6) erzeugt wird, mit zumindest einem vorgegebenen Schwellwert (Vmax), wobei die Vergleichsmittel (7) ein Signal zum Abschalten des Laserstrahlers (3) erzeugen, immer wenn der Wert, der durch das durch die Meßmittel (6) erzeugte Signal angenommen wird, den ersten vorgegebenen Schwellwert (Vmax) übersteigt.

5. Vorrichtung nach Anspruch 4, dadurch gekennzeichnet, daß das die Wand (4) bildende Material ein transparenter synthetischer Kunststoff ist.

6. Vorrichtung nach Anspruch 5, dadurch gekennzeichnet, daß der transparente synthetische Kunststoff PLEXIGLAS (registriertes Warenzeichen) ist.

7. Vorrichtung nach irgendeinem der Ansprüche 4 bis 6, dadurch gekennzeichnet, daß die hohle innere Aufnahme (5) peripher durch rauhe Flächen begrenzt ist.

8. Vorrichtung nach Anspruch 7, dadurch gekennzeichnet, daß die die hohle innere Aufnahme (5) begrenzenden Flächen eine mit Vertiefungen versehene Ausbildung besitzen.

9. Vorrichtung nach irgendeinem der Ansprüche 4 bis 8, dadurch gekennzeichnet, daß die Illuminationsmeßmittel (6) im wesentlichen durch eine Photodiode oder einen Phototransistor gebildet werden.

10. Vorrichtung nach irgendeinem der vorangegangenen Ansprüche, dadurch gekennzeichnet, daß die Vergleichsmittel (7) zumindest einen Schwellwertkomparator (20) aufweisen, der mit zumindest einem ersten Eingang (21) versehen ist, an dem der erste vorgegebene Schwellwert (Vmax) anliegt.

11. Vorrichtung nach Anspruch 10, dadurch gekennzeichnet, daß der Schwellwertkomparator (20) mit einem zweiten Eingang (22) versehen ist, an dem ein zweiter vorgegebener Schwellwert (Vmin) anliegt, wobei der Komparator (20) betätigbar ist, um ein Signal zum Abschalten des Laserstrahlers (3) zu erzeugen, auch in dem Fall, in dem das durch die Meßmittel (6) erzeugte Signal niedriger als der zweite vorgegebene Schwellwert (Vmin) ist.

12. Vorrichtung nach irgendeinem der Ansprüche 4 bis 11, dadurch gekennzeichnet, daß sie Illuminationsmittel (18) einschließt, die im Inneren der Aufnahme (5) angeordnet sind.

13. Vorrichtung nach Anspruch 12, dadurch gekennzeichnet, daß die Illuminationsmittel (18) im wesentlichen durch eine Lichtemitterdiode gebildet werden.

14. Vorrichtung nach irgendeinem der Ansprüche 4 bis 13, dadurch gekennzeichnet, daß sie Blendschirmmittel einschließt, die zum Schutz der Oberfläche jeder der Wände (4) auf der entgegengesetzten Seite des Bereiches angebracht sind, in dem der Laserstrahler (3) wirksam ist.